# EUROPEAN PATENT APPLICATION

(11) **EP 1 717 831 A2**
(43) Date of publication of application: **02.11.2006**
(21) Application number: 06008530.5
(22) Date of filing: 25.04.2006
(51) Int. Cl.: H01G 9/058

(54) **Positive electrode for electric double layer capacitors and method for the production thereof**

(30) Priority: 25.04.2005 JP 2005126618
(71) Applicant: Power Systems Co., Ltd., Yokohama-Shi, Kanagawa 224-0053 (JP); Yoshio, Masaki, Honjo-machi Saga-shi Saga 840-0027 (JP)
(72) Inventor: Nakamura, Hitoshi, Nagano 386-0012 (JP); Tanikawa, Takashi, Kanagawa 224-0053 (JP); Yoshio, Masaki, Saga 840-0027 (JP)
(74) Representative: Goddar, Heinz J.

(57) **Abstract**

The objects of the present invention are to improve characteristics of electric double layer capacitors, such as energy density and charge-and-discharge rate, and to provide a positive electrode for electric double layer capacitors useful for the foregoing object, and a simple method for its production. Disclosed is a positive electrode for electric double layer capacitors, wherein the electrode comprises graphite particles having a specific surface area of less than 10 m²/g.

## Description

### BACKGROUND OF THE INVENTION

### Field of the Invention

The present invention relates to electric double layer capacitors in which carbonaceous electrodes are immersed in an electrolytic solution, and particularly to positive electrodes for electric double layer capacitors and methods for their production.

### Description of the Related Art

Capacitors can repeat charge and discharge with a big electric current and, therefore, are promising as devices for electric power storage with high charge-and-discharge frequency.

The fact that carbonaceous electrodes are immersed in an organic electrolytic solution to form an electric double layer capacitor is known. Michio Okamura "Electric Double Layer Capacitors and Power Storage Systems" 2nd Edition, The Nikkan Kogyo Shimbun, Ltd., 2001, pages 34 to 37 discloses an electric double layer capacitor comprising a bath partitioned into two sections with a separator, an organic electrolytic solution filled in the bath and two carbonaceous electrodes, one electrode being immersed in one section of the bath and the other electrode being immersed in the other section of the bath. The organic electrolytic solution is a solution containing a solute dissolved in an organic solvent.

As the carbonaceous electrodes, activated carbon is employed. The activated carbon refers to shapeless carbon which has a very large specific surface area because it has innumerable fine pores. In the present specification, shapeless carbon having a specific surface area of about 1000 m²/g or more is referred to as activated carbon.

For use as an electrode member, activated carbon is formed in layers by backing with a metal sheet or a metal foil. Electricity is introduced into the bath through the metal sheet or metal foil, and is taken out from the bath. Application of electric current will develop an electrostatic capacitance through polarization of the layer of activated carbon in the bath. An electrode capable of developing an electrostatic capacitance through its polarization, like the layer of activated carbon, is referred to as a polarizable electrode. A conducting material which supports a polarizable electrode is referred to as a current collector.

Japanese Patent Laid-Open Publication No.H11(1999)-317333, and Japanese Patent Laid-Open Publication No.2002-25867 disclose a nonporous carbonaceous material as a polarizable electrodes for use in electric double layer capacitors. The carbonaceous material comprises fine crystalline carbon similar to graphite and has a specific surface area smaller than that of activated carbon. It is believed that application of voltage to a nonporous carboneous material makes electrolyte ions inserted with solvent between layers of fine crystalline carbon similar to graphite, resulting in formation of an electric double layer.

Japanese Patent Laid-Open Publication No.2000-77273 discloses an electric double layer capacitor including nonporous carbonaceous electrodes immersed in an organic electrolytic solution. The organic electrolytic solution must have ion conductivity, and therefore the solute is a salt composed of a cation and an anion combined together. As the cation, lower aliphatic quaternary ammonium, lower aliphatic quaternary phosphonium, imidazolium and the like are disclosed. As the anion, tetrafluoroboric acid, hexafluorophosphoric acid and the like are disclosed. The solvent of the organic electrolytic solution is a polar aprotic organic solvent. Specifically, ethylene carbonate, propylene carbonate, γ-butyrolactone, sulfolane and the like are disclosed.

The nonporous carbonaceous electrodes show electrostatic capacitance several times as much as those shown by porous electrodes made from activated carbon, and also has characteristics of expanding irreversibly at high rates during electric field activation. When carbonaceous electrodes expand, the volume of the capacitor itself also increases. Thus, the electrostatic capacitance per unit volume is lessened and it is difficult to increase the energy density of the capacitor sufficiently.

Activated carbon, nonporous carbon and the like exert electrostatic capacitance only after being subjected to an activation treatment such as heating at high temperatures in the presence of ion of alkali metal such as sodium and potassium (alkali activation) and charging at first time (electric field activation). A process of producing a carbonaceous electrode from nonporous carbon, etc., therefore, is attended with danger. In addition, it is complicated and requires high cost.

Japanese Patent Laid-Open Publication No.H5(1993)-299296 discloses an electrode for electric double layer capacitors which comprises graphite particles treated with acid, and an electric double layer capacitor in which that type of electrode is immersed in an aqueous electrolytic solution. However, an acid treatment of graphite will lead to reduction in bulk density, which will cause an inconvenience that the electrostatic capacitance per unit volume tends to decrease. Further, that electric double layer capacitor is of aqueous system and, therefore, does not have a performance high enough for practical use because its energy density which is estimated on the basis of its withstand voltage is only about 1/10 of that of an electric double layer capacitor using an organic electrolytic solution.

Japanese Patent Laid-Open Publication No.2002-151364 discloses an electrode for electric double layer capacitors which comprises graphite particles and an electric double layer capacitor comprising this type of electrode immersed in an organic electrolytic solution. It, however, is difficult to improve the energy density enough due to low crystallinity and high irreversible capacitance of this graphite. Further, the energy density of the electric double layer capacitor is only in a level equivalent to that of electric double layer capacitors having activated carbon electrodes.

Japanese Patent Laid-Open Publication No 2004-134658 discloses a positive electrode for electrochemical elements which comprises boron-containing graphite particles obtained by graphitizing carbon material containing boron or a boron compound, and an electrochemical element comprising this type of positive electrode and a negative electrode which are immersed in an organic electrolytic solution. This document explains that synthetic or natural graphite material free from boron includes only a slight amount of lattice defects in its crystallites and will be degraded significantly during charging and discharging when used as a positive electrode, leading to poor retention in capacitance of electrochemical elements.

For practical use as an auxiliary power source of electromobiles, batteries and power plants, electric double layer capacitors are demanded to have improved characteristics such as energy density and charge-and-discharge rate.

### SUMMARY OF THE INVENTION

The present invention intends to solve the aforementioned existing problems. The objects of the present invention are to improve characteristics of electric double layer capacitors, such as energy density and charge-and-discharge rate, and to provide a positive electrode for electric double layer capacitors useful for the foregoing object, and a simple method for its production.

The present invention provides a positive electrode for electric double layer capacitors, wherein the electrode comprises graphite particles having a specific surface area of less than 10 m²/g.

The present invention provides an electric double layer capacitor comprising the aforesaid positive electrode and a negative electrode which are immersed in an organic electrolytic solution.

Further, the present invention provides a method for producing a positive electrode for electric double layer capacitors including a step of forming graphite particles having a specific surface area of less than 10 m²/g.

Use of the positive electrode for electric double layer capacitors of the present invention successfully improves characteristics of electric double layer capacitors, such as energy density and charge-and-discharge rate. Further, the method for producing the positive electrode for electric double layer capacitors of the present invention is simple and safe.

### BRIEF DESCRIPTION OF THE DRAWING

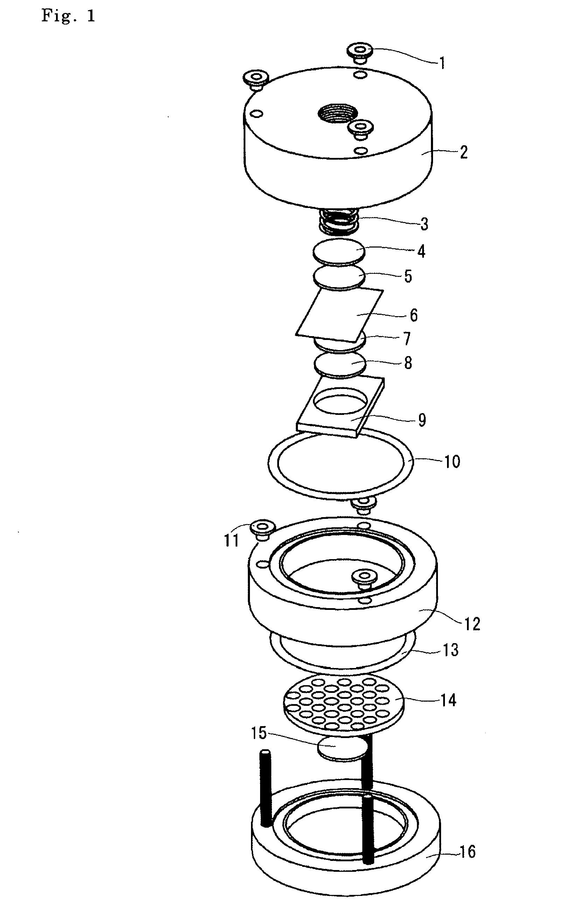

Fig. 1 is an assembling diagram showing the structure of the electric double layer capacitor of the Example. In the figure, 1 or 11 is an insulation washer; 2 is a top cover; 3 is a spring; 4 or 8 is a current collector; 5 or 7 is a carbonaceous electrode; 6 is a separator; 9 is a guide; 10 or 13 is an o-ring; 12 is a body; 14 is a pressing plate; 15 is a reference electrode; and 16 is a bottom cover.

### DESCRIPTION OF THE PREFERRED EMBODIMENTS

A "positive electrode" as used herein refers to a polarizable electrode for use as a positive electrode of an electric double layer capacitor unless otherwise stated. A "negative electrode" refers to a polarizable electrode for use as a negative electrode of an electric double layer capacitor unless otherwise stated.

In the electric double layer capacitor of the present invention, graphite particles are used as a carbonaceous material of a positive electrode. The graphite may be either natural one or artificial one. Graphite available in the present invention has a specific surface area of 10 m²/ or less, preferably 7 m²/g or less, and even more preferably 5 m²/g or less. The specific surface area can be determined by the BET adsorption method using N₂, CO₂ or the like as an adsorbate.

In polarizable electrodes, an electrostatic capacitance is generated through adsorption of an electrolyte onto the surface of carbonaceous material. Therefore, it is thought that increasing the surface area of carbonaceous material is effective in improvement in electrostatic capacitance. This concept is applied not only to activated carbon which is inherently porous but also to nonporous carbon which includes microcrystal carbon similar to graphite. Nonporous carbon develops its electrostatic capacitance only after irreversible expansion caused by the first charging (electric field activation). By the initial charging, electrolyte ions pry the gap between layers open and, therefore, nonporous carbon is also theoretically rendered porous.

On the other hand, graphite has a very small specific surface area as compared with activated carbon or nonporous carbon and has high crystallinity. Graphite develops its electrostatic capacitance from the first charging. In addition, its expansion at the time of charging is reversible and the expansion ratio is low. Graphite is inherently poor in specific surface area and, therefore, exhibits a behavior of not being rendered porous even by electric field activation. In sum, graphite is theoretically a very disadvantageous material for developing electrostatic capacitance and there heretofore were almost no opportunities to be used for polarizable electrodes of electric double layer capacitors.

Graphite suitable for use in the positive electrode for electric double layer capacitors of the present invention is one with high crystallinity. For example, the crystal lattice constant C₀₍₀₀₂₎ of a 002 face should just be of from 0.67 to 0.68 nm, preferably from 0.671 to 0.674.

Further, the half width of a 002 peak in an X-ray crystal diffraction spectrum using CuKα rays should just be less than 0.5, preferably of from 0.1 to 0.4, and more preferably of from 0.2 to 0.3. The irreversible capacitance of an electric double layer capacitor tends to increase as the crystallinity of graphite decreases.

It is preferable that the graphite be one in which moderate turbulence is generated in a graphite layer and the ratio of a basal plane to an edge plane falls within a fixed range. The turbulence of a graphite layer appears, for example, in the result of Raman spectroscopic analysis. Desirable graphite is one having a ratio of the peak intensity at 1360 cm⁻¹ (hereinafter, I(1360)) in a Raman spectroscopic spectrum to the peak intensity at 1580 cm⁻¹ (hereinafter, I(1580)), namely I(1360)/I(1580), of from 0.02 to 0.5, preferably from 0.05 to 0.3, more preferably 0.1 to 0.2, even more preferably about 0.16 (for example, from 0.13 to 0.17).

Desirable graphite may also be specified by a result of X-ray crystallographic analysis. In short, preferred is graphite having a ratio of the peak intensity of rhombohedral crystals (henceforth "IB") to the peak intensity of hexagonal crystals (henceforth "IA") in an X-ray crystal diffraction spectrum (henceforth "IB/IA") of 0.3 or more, preferably from 0.35 to 1.3.

The shape or dimensions of graphite particles are not particularly limited, if the particles can be formed into a polarizable electrode. For example, flaky graphite particles, consolidated graphite particles and spheroidized graphite particles may be employed. The properties and preparation methods of such graphite particles are publicly known.

In general, flaky graphite particles have a thickness of 1 µm or less, preferably 0.1 µm or less, and a maximum particle length of 100 µm or less, preferably 50 µm or less. Flaky graphite particles can be produced by pulverizing natural graphite or artificial graphite with chemical processes or physical processes. For example, flaky graphite particles may be obtained by a generally known method in which natural graphite, or artificial graphite such as Kish graphite and high-crystalline pyrolytic graphite, is treated with mixed acid of sulfuric acid and nitric acid and is heated to obtain expanded graphite, and it is pulverized with ultrasonic wave processes and the like to obtain flaky graphite particles; or by a generally known method in which a graphite-sulfuric acid intercalation compound prepared by electrochemical oxidization of graphite in sulfuric acid or a graphite-organic substance intercalation compound such as graphite-tetrahydrofuran, is expanded through its rapid heating treatment by means of an externally or internally heating furnace or by laser heating, and pulverizing it to obtain flaky graphite particles. Otherwise, flaky graphite particles may be obtained by pulverizing mechanically natural graphite or artificial graphite with using for example a jet mill and the like.

The flaky graphite particles can be produced by flaking and granulating, for example, natural graphite or artificial graphite. Examples of the method of the flaking and granulating include a method comprising pulverizing these mechanically or physically using supersonic wave or various mills. The graphite particles obtained by pulverizing and flaking natural graphite or artificial graphite with a mill not applying share force such as a jet mill, are referred specifically to as "plate-like graphite particles". On the other hand, the graphite particles obtained by pulverizing and flaking expanded graphite using ultrasonic wave, are referred specifically to as "foliated graphite particles". Flaky graphite particles may be subjected to annealing in an inert atmosphere at a temperature of from 2000°C to 2800°C for about 0.1 to 10 hours to enhance crystallinity.

Consolidated graphite particles are graphite particles with a high bulk density and generally have a tap density of from 0.7 to 1.3 g/cm³. Consolidated graphite particles include 10% by volume or more of graphite particles in spindle form having an aspect ratio of from 1 to 5, or include 50% by volume or more of graphite particles in disc form having an aspect ratio of from 1 to 10.

Consolidated graphite particles can be produced by consolidating raw material graphite particles. Either natural graphite or synthetic graphite may be used as the raw material graphite particles, but natural graphite is preferred because of its high crystallinity and availability. Graphite may be processed into raw material graphite particles by pulverization of the graphite itself. Alternatively, the aforementioned flaky graphite particles may be used as raw material graphite particles.

Consolidation treatment is performed by impacting raw material graphite particles. Consolidation treatment using a vibration mill is more preferable particularly because consolidation can be achieved to a high degree. Examples of the vibration mill include vibration ball mills, vibration disc mills and vibration rod mills.

When raw material plate-like graphite particles having a high aspect ratio is subjected to consolidation treatment, the raw material graphite particles are converted into secondary particles through their lamination on basal planes of graphite and simultaneously the edges of the secondary particles laminated are rounded to transform into thick discs having an aspect ratio of from 1 to 10 or spindles having an aspect ratio of from 1 to 5. Thus, the raw material graphite particles are converted into graphite particles with a small aspect ratio.

Conversion of graphite particles into those having a small aspect ratio will lead to formation of graphite particles having a high crystallinity but having a high isotropy and a high tap density. Therefore, when shaping the resulting graphite particles into a polarizable electrode, it is possible to make a graphite slurry have a high graphite concentration and the electrode after shaping has a high graphite density.

Spheroidized graphite particles can be prepared by pulverization of high-crystalline graphite using an impact type pulverizer with a relatively weak crushing power. As the impact type pulverizer, a hammer mill and a pin mill may be used, for example. The peripheral linear velocity of a rotating hammer or a rotating pin is preferably about 50 to 200 m/sec. The charging or discharging of graphite to or from such a pulverizer is preferably carried out with entrainment of the graphite in a stream of gas such as air.

The degree of spheroidization of a graphite particle can be expressed by the ratio of the major axis to the minor axis (major axis/minor axis) of the particle. In an arbitrary cross section of a graphite particle, a pair of axes perpendicularly intersecting each other at the center of gravity are chosen so that the major axis-to-minor axis ratio is maximized. The closer to 1 the major axis-to-minor axis ratio is, the closer to a true sphere the graphite particle is. It is possible to adjust the major axis-to-minor axis ratio to 4 or less (namely, from 1 to 4) through the aforementioned spheroidization treatment. When fully conducting the spheroidization treatment, it is possible to adjust the major axis-to-minor axis ratio to 2 or less (namely, from 1 to 2).

High-crystalline graphite is a substance resulted from many, flat-spreading AB planes comprising a network structure of carbon particles, being laminated and grown into thick and massive grains. The bonding force between the AB planes laminated (namely, the bonding force in the C-axis direction) is extremely weaker than the bonding force of an AB plane. Therefore, pulverization tends to preferentially cause exfoliation of weakly bonding AB planes to form plate-like particles.

When observing a cross section of a graphite crystal perpendicular to its AB plane through an electron microscope, it is possible to find streak-like lines which show a lamination structure. The internal structure of plate-like graphite is simple. Observation of a cross section perpendicular to an AB plane reveals that streak-like lines which show a layered structure are always linear and that the structure is a tabular layered structure.

On the other hand, the internal structure of spheroidized graphite particles is found to be an extremely complicated structure because many of the streak-like lines showing a layered structure are curved and many voids are found. In other words, plate-like (tabular) particles are spheroidized as if they have been folded up or crumpled. The change of a layered structure originally in a straight line form to a structure in a curved line form is referred to as "folding".

What is more characteristic in spheroidized graphite particles is that portions located near the surface of a particle are in a curved layered structure along the surface even in a cross section chosen at random. That is, the surface of a spheroidized graphite particle is covered generally with a folded, layered structure and the outside surface is formed of an AB plane (namely, basal plane) of graphite crystals.

Spheroidized graphite particles generally have an average particle diameter of 100 µm or less, and preferably from 5 to 50 µm. If the average particle diameter of spheroidized graphite particles is less than 5 µm, the density of an electrode will increase too much and the contact with an electrolytic solution is inhibited. If over 100 µm, the spheroidized graphite particles will break through a separator to cause short-circuit at a high probability.

By roughly pulverizing raw material graphite to be fed to an impact type pulverizer to 5 mm or less in advance, it is possible to make spheroidized graphite particles have an average particle diameter of from 5 to 50 µm.

Spheroidized graphite particles have an increased tap density. For example, although plate-like graphite particles typically have a tap density of about 0.4 to 0.7 g/cc, the spheroidized graphite particles to be used in the present invention have a tap density of about 0.6 to 1.4 g/cc.

A positive electrode including graphite particles can be prepared by a method similar to a conventional method using graphite particles as a carbonaceous material. For example, sheet-form electrodes are produced by regulating the particle size of the aforementioned graphite particles, subsequently adding an electrically-conductive aid, such as carbon black, for imparting electrical conductivity to the graphite particles, and a binder, such as polyvinylidene fluoride (PVDF), kneading the mixture, and shaping the kneadate into sheet-form by rolling. Besides carbon black, acetylene black or the like may be used as an electrically-conductive aid. Examples of available binder besides PVDF include PTFE, PR and PP. The mixing ratio of the nonporous carbon to the electrically-conductive aid (carbon black) to the binder (PVDF) is generally about 10 to 1/0.5 to 10/0.5 to 0.25.

The resulting sheet-form polarizable electrode is joined to a current collector, yielding an electrode member. As the current collector, a material is used which has a form usually used for electric double layer capacitors. The form of the current collector may be a sheet form, a prismatic form, a cylindrical form, and the like. A particularly preferable form is sheet or foil. The material of the current collector may be aluminum, copper, silver, nickel, titanium, and the like.

The polarizable electrode or electrode member prepared can be used as a positive electrode of an electric double layer capacitor having a structure conventionally known. Structures of electric double layer capacitors are shown, for example, in Figs. 5 and 6 of Japanese Patent Laid-Open Publication No.H11(1999)-317333, Fig. 6 of Japanese Patent Laid-Open Publication No.2002-25867, and Figs. 1 to 4 of Japanese Patent Laid-Open Publication No.2000-77273. Generally, such an electric double layer capacitor can be assembled by superposing electrode members via a separator to form a positive and negative electrodes, and then impregnating the electrodes with an electrolytic solution.

As a negative electrode, electrodes which have conventionally been used for electric double layer capacitors may be used. For example, an electrode member for a negative electrode can be produced by forming a polarizable electrode in a manner similar to that mentioned above except for using activated carbon particles or nonporous carbon particles instead of the graphite particles, followed by joining the polarizable electrode to a current collector.

As the electrolytic solution, a so-called organic electrolytic solution prepared by dissolving an electrolyte as a solute in an organic solvent may be used. As the electrolyte, substances which are usually used by persons skilled in the art, such as those disclosed in Japanese Patent Laid-Open Publication No.2000-77273, may be used. Specific examples include salts with tetrafluoroboric acid or hexafluoroboric acid, of lower aliphatic quaternary ammonium such as triethylmethyl ammonium (TEMA), tetraethylammonium (TEA) and tetrabutylammonium (TBA); lower aliphatic quaternary phosphonium such as tetraethylphosphonium (TEP); or imidazolium derivatives, such as 1-ethyl-3-methylimidazolium (EMI).

Pariclarly preferable electrolyte are salts of pyrrolidinium compounds and their derivatives. Desirable pyrrolidinium compound salts have a structure shown by the formula:

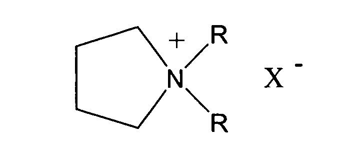

wherein R is each independently an alkyl group or Rs form together an alkylene group, and X⁻ is a counter anion. Pyrrolidinium compound salts are conventionally known and any one prepared by a method known to those skilled in the art may be used.

Desirable ammonium components in the pyrrolidinium compound salts are those wherein in the formula given above R is each independently an alkyl group having from 1 to 10 carbon atoms or Rs form together an alkylene group having from 3 to 8 carbon atoms. More preferable are a compound wherein Rs form together an alkylene group having 4 carbon atoms (namely, spirobipyrrolidinium) and a compound wherein Rs form together an alkylene group having 5 carbon atoms (namely, piperidine-1-spiro-1'-pyrrolidinium). Use of such compounds leads to an advantage that the decomposition voltage has a wide potential window and they are dissolved in a large amount in a solvent. The alkylene groups may have a substituent.

The counter anion X⁻ may be any one which has heretofore been used as an electrolyte ion of an organic electrolytic solution. Examples include a tetrafluoroborate anion, a fluoroborate anion, a fluorophosphate anion, a hexafluorophosphate anion, a perchlorate anion, a borodisalicylate anion and a borodioxalate anion. Desirable counter anions are a tetrafluoroborate anion and a hexafluorophosphate anion.

When the aforesaid electrolyte is dissolved in an organic solvent as a solute, an organic electrolytic solution for electric double layer capacitors is obtained. The concentration of an electrolyte in an organic electrolytic solution is adjusted to from 0.8 to 3.5 mol% and preferably from 1.0 to 2.5 mol%. If the concentration of the electrolyte is less than 0.8 mol%, the number of ions contained is not sufficient and enough capacitance may not be produced. A concentration over 2.5 mol% is meaningless because it does not contribute to capacitance. Electrolytes may be used alone or as mixtures of two or more kinds of them. Such electrolytes may be used together with electrolytes conventionally employed for organic electrolytic solutions.

As the organic solvent, ones which have heretofore been used for organic electric double layer capacitors may be used. For example, ethylene carbonate (EC), propylene carbonate (PC), γ-butyrolactone (GBL) and sulfolane (SL) are preferable because of their high dissolvability of electrolytes and their high safety. Solvents including these as main solvent and at least one auxiliary solvent selected from dimethyl carbonate (DMC), ethylmethyl carbonate (EMC) and diethyl carbonate (DEC) are also useful because the low-temperature characteristics of electric double layer capacitors are improved. Use of acetonitrile (AC) as an organic solvent is preferable from the viewpoint of performances because it improves conductivity of electrolytic solutions. However, in some cases, applications are restricted.

Graphite particles can exhibit an electrostatic capacitance as a polarizable electrode only after being formed into an electrode. In other words, unlike the cases of using the conventional activated carbon particles or the nonporous carbon particles, when producing a positive electrode from graphite particles, there is no need to conduct activation treatment such as heating at high temperatures in the presence of a strong alkali or conducting initial charging. Therefore, the method of the present invention in which a carbonaceous positive electrode is produced by use of graphite particles is safe and easy, and the cost needed for its production is not expensive.

The present invention will be described in more detail below with reference to Examples, but the invention is not limited thereto. Note that the amounts expressed in "part(s)" or "%" in the Examples are by weight unless otherwise stated.

### EXAMPLES

### Analysis of graphite

The following graphite particles 1 through 5 were prepared. Graphite particles 1 are flaky graphite particles prepared by heat expanding natural plate-like graphite through treatment with mixed acid, followed by wet grinding with media.
Graphite particles 2-4 are consolidated graphite particles prepared by providing natural plate-like graphite particles as raw graphite and pulverizing the particles by a vibrating mill.
Graphite particles 5 are low-crystalline graphite particles prepared by providing natural plate-like graphite particles as raw graphite and strongly dry pulverizing the particles in a planetary mill for about 30 minutes.
Graphite particles 6 are artificial graphite, and are spheroidized graphite particles prepared by baking mesophase carbon at 2800°C to graphitize.
Then, graphite particles 1-6 were analyzed by the methods shown below. Analysis results are shown in Table 1.

### (1) Specific surface area

A BET specific surface area was determined by means of a specific surface area analyzer ("Gemini2375" manufactured by Shimadzu Corp.). Nitrogen was used as an adsorbate and the adsorption temperature was set to 77K.

### (2) X-ray crystallographic analysis

Graphite particles were measured by means of an X-ray diffraction analyzer ("RINT-UltimaIII" manufactured by Rigaku Corp.). Through analysis of the resulting X-ray diffraction spectrum, a crystal lattice constant of the (002) plane (C₀₍₀₀₂₎), an average spacing d₀₀₂ and a half width of a (002) peak (a peak near 2θ = 26.5°) were determined. The measurement was conducted under 40 kV and 200 mA using CuKα as target.
The peak position of a rhombohedral crystal (101-R) was present near 2θ = 43.3° and the peak intensity thereof was indicated by IB. The peak position of a hexagonal crystal (101-H) was present near 2θ = 44.5° and the peak intensity was indicated by IA. Then, a rhombohedral crystal ratio present in the crystal structure IB/IA was calculated.

### (3) Raman spectroscopic analysis

Graphite particles were measured by means of a Raman spectrometer ("laser Raman spectrometer NRS-3100" manufactured by JASCO Corp.). In the resulting Raman scattering spectrum, a ratio of the peak intensity at 1360 cm⁻¹ to the peak intensity at 1580 cm⁻¹, I(1360)/I(1580), was determined.

### (4) External configuration

The external configuration was checked through observation by an electron microscope manufactured by JEOL Co., Ltd.

### (5) Tap density

A sample was placed in a 10-ml glass graduated cylinder and then tapped. The volume of the sample was measured when it stopped changing. A value obtained by dividing the sample weight by the sample volume was used as a tap density.

### (6) Average particle diameter

The average particle diameter (µm) was measured by means of a particle size distribution analyzer (a centrifugal automatic particle size distribution analyzer "CAPA-300" manufactured by HORIBA, Ltd.).

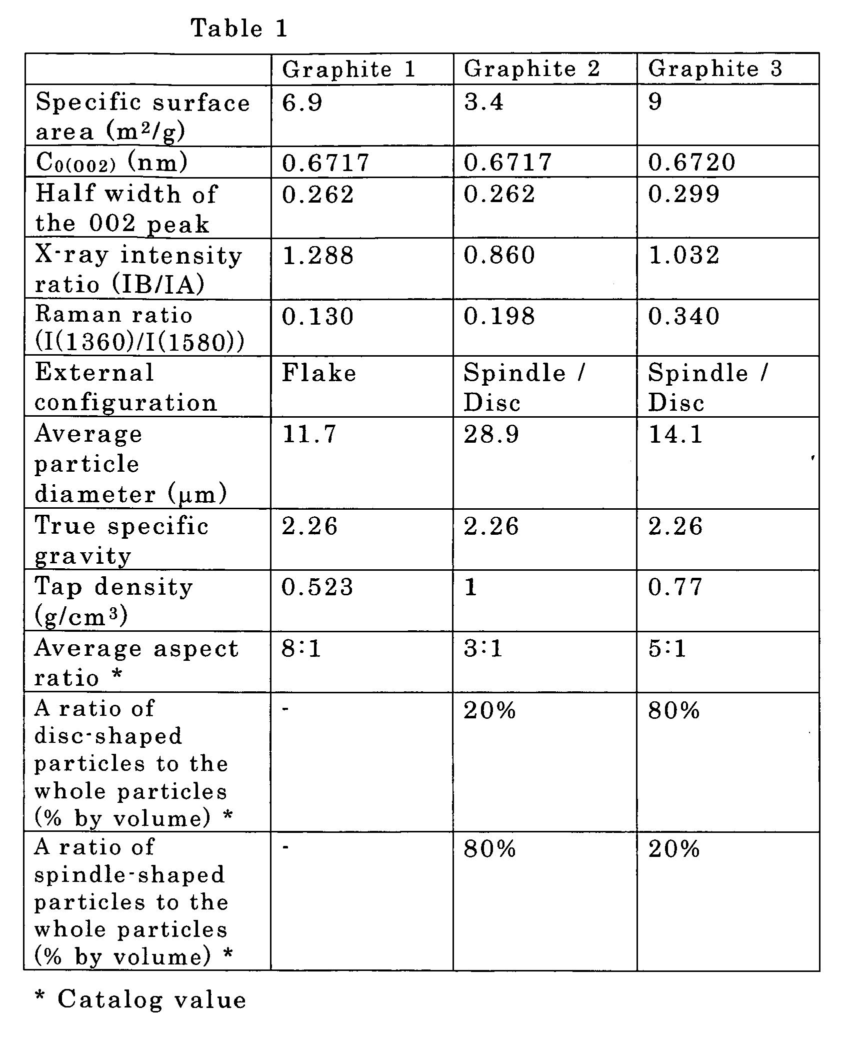

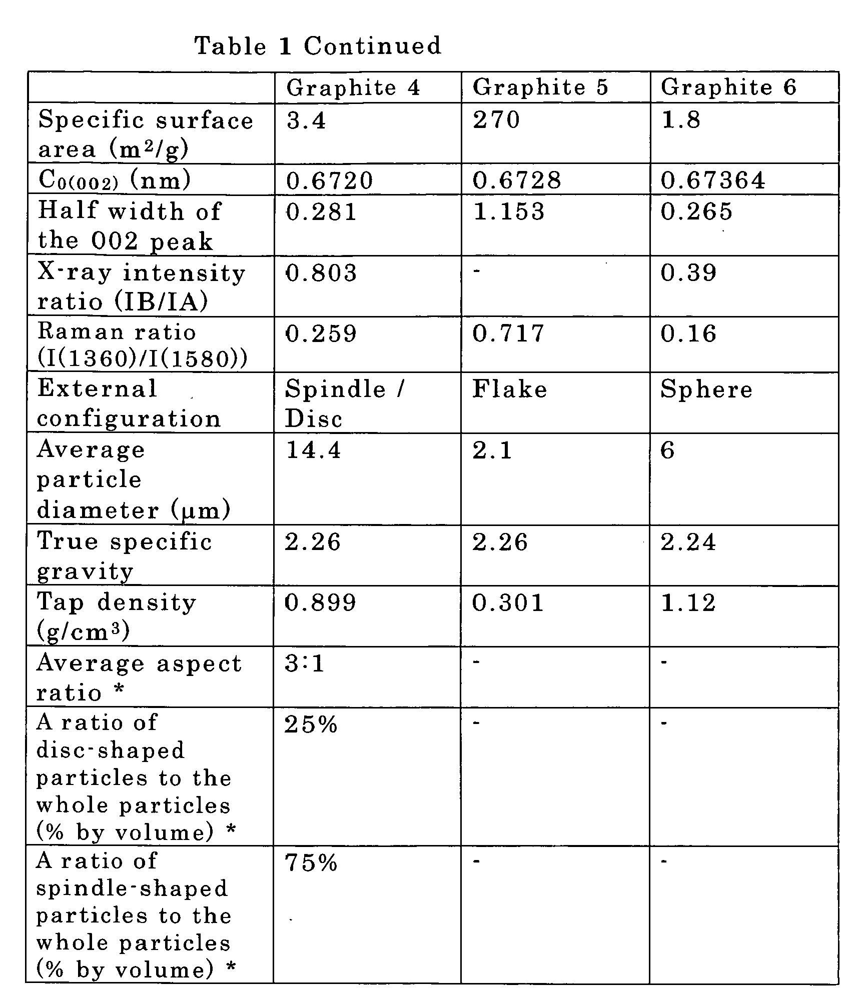

### Example 1

### (1) Preparation of positive electrode

3g of the graphite particles 1, 1g of acetylene black (manufactured by DENKI KAGAKU KOGYO KABUSHIKI KAISHA) and 0.3g of polytetrafluoroethylene powder (manufactured by Mitsui duPont Fluorochemical Co., Ltd.) were mixed and kneaded in an agate mortar. The kneaded matter was shaped into a sheet having a uniform thickness of 0.4 mm by use of a molding machine, yielding a positive electrode.

(2) Production of electric double layer capacitor Appropriate amounts of activated carbon ("MSP20" manufactured by THE KANSAI COKE AND CHEMICALS Co., Ltd.), acetylene black (manufactured by DENKI KAGAKU KOGYO KABUSHIKI KAISHA), and a polyvinylidene fluoride (PVDF) powder (manufactured by KUREHA CORPORATION) were mixed and kneaded in an agate mortar. The kneaded matter was shaped into a sheet having a uniform thickness of 0.4 mm by use of a molding machine, yielding a negative electrode.

A disc with a diameter of 20 mmφ was punched out of each of the resulting carbon sheets and then was used to fabricate a three-electrode cell as shown in Figure 1.
Aluminum foil was used as a current collector and polyethylene membrane (porosity: 30%) was used as a separator. A sheet prepared by sheeting activated carbon #1711 in a manner similar to those mentioned above was used as a reference electrode.
The cell was dried in a vacuum at 140°C for 24 hours, and then cooled. An electrolytic solution was prepared by dissolving spirobipyrrolidinium tetrafluoroborate (SBPBF₄) into propylene carbonate to a concentration of 2.0 mol%. The resulting electrolytic solution was poured into the cell to produce an electric double layer capacitor.

### (3) Performance test

A charge-and-discharge tester "CDT-RD20" manufactured by Power Systems Co., Ltd. was connected to the electric double layer capacitor assembled and constant-current charging at 5 mA was conducted for 7200 seconds. After arrival at a prescribed voltage, constant-current discharging at 5 mA was conducted. The prescribed voltage was 3.5 V. Three cycles of operation was carried out and the data of the third cycle were adopted. The capacitance (F/cc) was calculated from the discharged power. The direct current resistance (ΩF) was calculated from the IR drop during the constant-current discharging. The operation of charging and discharging under the aforementioned conditions was repeated 500 cycles and the capacitance retention (%) after the repetition of 500 cycles was measured. These test results are shown in Table 3.

### Examples 2 to 11

An electric double layer capacitor was prepared and examined in a manner the same as Example 1 except for changing the carbonaceous material of the positive electrode and the electrolytic solution to those shown in Table 2. The test results are shown in Table 3.

### Comparative Examples 1 and 2

An electric double layer capacitor was prepared and examined in a manner the same as Example 1 except for using activated carbon ("MSP20" manufactured by THE KANSAI COKE AND CHEMICALS CO., LTD.) for a positive and negative electrodes and changing the electrolytic solution to that shown in Table 2. This electric double layer capacitor was examined in a manner the same as Example 1 except using a charging voltage of 2.7 V. The test results are shown in Table 3.

### Comparative Example 3

An electric double layer capacitor was prepared and examined in a manner the same as Example 1 except for using graphite 5 for a positive and negative electrodes and changing the electrolytic solution to that shown in Table 2. The test results are shown in Table 3.

**Table 2**

| | Positive electrode | Negative electrode | Electrolytic solution |
|---|---|---|---|
| Example 1 | Graphite 1 | Activated carbon ^{a)} | SBPBF₄/PC ^{b)} |
| Example 2 | Graphite 1 | Activated carbon | PSPBF₄/PC ^{c)} |
| Example 3 | Graphite 1 | Activated carbon | TEMABF₄/PC ^{d)} |
| Example 4 | Graphite 2 | Activated carbon | SBPBF₄/PC |
| Example 5 | Graphite 3 | Activated carbon | SBPBF₄/PC |
| Example 6 | Graphite 4 | Activated carbon | SBPBF₄/PC |
| Example 7 | Graphite 1 | Activated carbon | SBPPF₆/PC ^{e)} |
| Example 8 | Graphite 2 | Activated carbon | SBPPF₆/PC |
| Example 9 | Graphite 3 | Activated carbon | SBPPF₆/PC |
| Example 10 | Graphite 4 | Activated carbon | SBPPF₆/PC |
| Example 11 | Graphite 6 | Activated carbon | SBPPF₆/PC |
| Comparative Example 1 | Activated carbon | Activated carbon | SBPBF₄/PC |
| Comparative Example 2 | Activated carbon | Activated carbon | SBPPF₆/PC |
| Comparative Example 3 | Graphite 5 | Graphite 5 | TEMABF₄/PC |

| | | | |
|---|---|---|---|
| a) Activated carbon "MSP20" manufactured by THE KANSAI COKE AND CHEMICALS CO., LTD. (specific surface area: about 2000 m²/g) b) Electrolytic solution prepared by dissolving spirobipyrrolidinium tetrafluoroborate (SBPBF₄) into propylene carbonate (PC) to a concentration of 2.0 mol% c) Electrolytic solution prepared by dissolving piperidine-1-spiro-1'-pyrrolidinium tetrafluoroborate (PSPBF₄) into propylene carbonate (PC) to a concentration of 2.0 mol% d) An electrolytic solution prepared by dissolving triethylmethylammonium tetrafluoroborate (TMEABF₄) into propylene carbonate to a concentration of 1.5 mol%. e) An electrolytic solution prepared by dissolving spirobipyrrolidinium hexafluorophosphate (SBPPF₆) into propylene carbonate to a concentration of 2.0 mol%. | | | |

**Table 3**

| | Capacitance (F/CC) | | Resistance (ΩF) | Capacitance retention (%) |
|---|---|---|---|---|
| | The total electrode basis ^{f)} | Positive electrode basis ^{g)} | | |
| Example 1 | 50.2 | 75.3 | 11.2 | 84.3 |
| Example 2 | 51.6 | 77.4 | 10.7 | 85.5 |
| Example 3 | 48.1 | 75.3 | 11.2 | 83.1 |
| Example 4 | 74.1 | 111.2 | 17.5 | 89.8 |
| Example 5 | 58.3 | 87.5 | 14.6 | 87.1 |
| Example 6 | 76.5 | 114.8 | 21.1 | 88.4 |
| Example 7 | 60.7 | 90.4 | 12.8 | 87.7 |
| Example 8 | 89.7 | 132.3 | 20.0 | 93.4 |
| Example 9 | 70.5 | 104.9 | 16.6 | 90.6 |
| Example 10 | 92.6 | 136.6 | 24.1 | 91.9 |
| Example 11 | 72.3 | 110.9 | 19.8 | 88.1 |
| Comparative Example 1 | 22.3 | 44.6 | 8.6 | 90.3 |
| Comparative Example 2 | 21.6 | 43.2 | 8.9 | 89.6 |
| Comparative Example 3 | 26.8 | 40.6 | 11.9 | 84.1 |

| | | | | |
|---|---|---|---|---|
| f) Calculation on the basis of the volume of the whole electrode. g) Calculation on the basis of the volume of the positive electrode. | | | | |

According to the results of the Examples, electric double layer capacitors in which graphite particles with a specific surface area of 10 m²/g or less are used for a positive electrode are superior in energy density and charge-and-discharge rate to those using activated carbon.
The features disclosed in the foregoing description, in the claims and/or in the accompanying drawings may, both separately and in any combination thereof, be material for realising the invention in diverse forms thereof.

## Claims

1. A positive electrode for electric double layer capacitors, wherein the electrode comprises graphite particles having a specific surface area of less than 10 m²/g.

2. The positive electrode for electric double layer capacitors according to claim 1, wherein the graphite particles have a crystal lattice constant C₀₍₀₀₂₎ of from 0.67 to 0.68 nm.

3. The positive electrode for electric double layer capacitors according to claim 1, wherein the graphite particles have a ratio of the peak intensity at 1360 cm⁻¹ and the peak intensity at 1580 cm⁻¹ in the Raman spectroscopic spectrum of from 0.02 to 0.30.

4. The positive electrode for electric double layer capacitors according to claim 1, wherein the graphite particles have a ratio of the peak intensity of rhombohedral crystals to the peak intensity of hexagonal crystals in the X-ray crystal diffraction spectrum of 0.3 or more.

5. The positive electrode for electric double layer capacitors according to claim 1, wherein the graphite particles are consolidated graphite particles having a tap density of from 0.7 to 1.3 g/cm³.

6. The positive electrode for electric double layer capacitors according to claim 1, wherein the graphite particles are spheroidized graphite particles having a folded, layered structure.

7. An electric double layer capacitor comprising a positive electrode and a negative electrode which are immersed in an organic electrolytic solution, wherein the positive electrode comprises graphite particles having a specific surface area of less than 10 m²/g.

8. The electric double layer capacitor according to claim 7, wherein the graphite particles have a crystal lattice constant C₀₍₀₀₂₎ of from 0.67 to 0.68 nm.

9. The electric double layer capacitor according to claim 7, wherein the graphite particles have a ratio of the peak intensity at 1360 cm⁻¹ and the peak intensity at 1580 cm⁻¹ in the Raman spectroscopic spectrum of from 0.02 to 0.30.

10. The electric double layer capacitor according to claim 7, wherein the graphite particles have a ratio of the peak intensity of rhombohedral crystals to the peak intensity of hexagonal crystals in the X-ray crystal diffraction spectrum of 0.3 or more.

11. The electric double layer capacitor according to claim 7, wherein the graphite particles are consolidated graphite particles having a tap density of from 0.7 to 1.3 g/cm³.

12. The electric double layer capacitor according to claim 7, wherein the graphite particles are spheroidized graphite particles having a folded, layered structure.

13. The electric double layer capacitor according to claim 7, wherein the negative electrode comprises activated carbon particles, non-polar carbon particles, or graphite particles having a ratio of the peak intensity of rhombohedral crystals to the peak intensity of hexagonal crystals in the X-ray crystal diffraction spectrum of 0.3 or more.

14. The electric double layer capacitor according to claim 7, wherein the organic electrolytic solution comprises at least one electrolyte selected from the group consisting of tetrafluoroborate salts of quaternary ammonium or derivatives thereof and hexafluorophosphate salts of quaternary ammonium or derivatives thereof.

15. The electric double layer capacitor according to claim 7, wherein the organic electrolytic solution comprises at least one electrolyte of the formula: 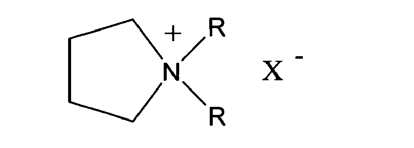 wherein R is each independently an alkyl group or Rs form together an alkylene group, and X⁻ is a tetrafluoroborate anion or a hexafluorophosphate anion.

16. A method for producing a positive electrode for electric double layer capacitors comprising a step of forming graphite particles having a specific surface area of less than 10 m²/g.

17. The method according to claim 16, wherein the graphite particles are consolidated graphite particles having a tap density of from 0.7 to 1.3 g/cm³.

18. The method according to claim 16, wherein the graphite particles are spheroidized graphite particles having a folded, layered structure.
